# EUROPEAN PATENT APPLICATION

(11) **EP 4 704 410 A1**
(43) Date of publication of application: **04.03.2026**
(21) Application number: 25198240.1
(22) Date of filing: 26.08.2025
(51) Int. Cl.: H04L 67/12, H04W 4/48, H04W 4/50, H04W 4/80

(54) **SYSTEM AND METHOD FOR CONNECTING MULTIPLE DEVICES TO A VEHICLE SYSTEM**

(30) Priority: 26.08.2024 US 202418814728
(71) Applicant: Toyota Motor North America, Inc., Plano, TX 75024 (US)
(72) Inventor: HENRY, Chris P., Plano, 75024 (US); BAILEY, Travis A., Plano, 75024 (US); WU, Sindy, Plano, 75024 (US); KHOO, Wilson-Boon S., Plano, 75024 (US)
(74) Representative: D Young & Co LLP

(57) **Abstract**

Systems and methods for managing the connection of multiple devices to a vehicle system are described herein. In one example, a system includes a processor and a memory in communication with the processor. The memory includes instructions that, when executed by the processor, cause the processor to connect a most recently utilized device based on a connection history to a vehicle system such that the most recently utilized device utilizes a first set of services. In addition, the instructions cause the processor to connect, when a resolve conflict flag is set to true, a less recently utilized device to the vehicle system such that the less recently utilized device utilizes a second set of services.

## Description

### TECHNICAL FIELD

The subject matter described herein relates, in general, to systems and methods for connecting multiple devices to a vehicle system.

### BACKGROUND

The background description provided is to present the context of the disclosure generally. Work of the inventor, to the extent it may be described in this background section, and aspects of the description that may not otherwise qualify as prior art at the time of filing, are neither expressly nor impliedly admitted as prior art against the present technology.

Some vehicles can connect to devices, such as mobile phones, tablets, and the like. Connecting to these devices allows these devices to provide a number of benefits to vehicle occupants, including the ability to utilize mobile device applications on their vehicles. For example, CarPlay, offered by Apple, Inc. of Cupertino, California and Android Auto, offered by Google, LLC of Menlo Park, California, enables a vehicle head unit to be a display and controller for a mobile device.

There may be some situations where multiple devices attempt to connect to a vehicle system. For example, two family members who share the same vehicle may be in a situation where they and their devices are present in the vehicle at the same time. When this occurs, prior art solutions generally connect the most recently connected device to the vehicle system, while the other mobile device may be left disconnected.

### SUMMARY

This section generally summarizes the disclosure and is not a comprehensive explanation of its full scope or all its features.

In one embodiment, a system includes a processor and a memory in communication with the processor. The memory includes instructions that, when executed by the processor, cause the processor to connect a most recently utilized device based on a connection history to a vehicle system such that the most recently utilized device utilizes a first set of services. In addition, the instructions cause the processor to connect, when a resolve conflict flag is set to true, a less recently utilized device to the vehicle system such that the less recently utilized device utilizes a second set of services.

In another embodiment, a method includes the steps of, based on a connection history, connecting, using a first connection methodology, a most recently utilized device from a plurality of devices to a vehicle system such that the most recently utilized device utilizes a first set of services. Like before, when a resolve conflict flag is set to true, the method connects, using a second connection methodology, a less recently utilized device from the plurality of devices to the vehicle system such that the less recently utilized device utilizes a second set of services.

In yet another embodiment, a non-transitory computer-readable medium stores instructions that, when executed by a processor, cause the processor to connect a most recently utilized device based on a connection history to a vehicle system such that the most recently utilized device utilizes a first set of services. Like before, the instructions also cause the processor to connect, when a resolve conflict flag is set to true, a less recently utilized device to the vehicle system such that the less recently utilized device utilizes a second set of services.

Further areas of applicability and various methods of enhancing the disclosed technology will become apparent from the description provided. The description and specific examples in this summary are intended for illustration only and are not intended to limit the scope of the present disclosure.

### BRIEF DESCRIPTION OF THE DRAWINGS

The accompanying drawings, which are incorporated in and constitute a part of the specification, illustrate various systems, methods, and other embodiments of the disclosure. It will be appreciated that the illustrated element boundaries (e.g., boxes, groups of boxes, or other shapes) in the figures represent one embodiment of the boundaries. In some embodiments, one element may be designed as multiple elements or multiple elements may be designed as one element. In some embodiments, an element shown as an internal component of another element may be implemented as an external component and vice versa. Furthermore, elements may not be drawn to scale.
FIG. 1 illustrates an interior of a vehicle utilizing a device connection system for managing the connection of multiple devices to a vehicle system.
FIG. 2 illustrates a block diagram of the vehicle incorporating the device connection system for managing the connection of multiple devices to a vehicle system.
FIG. 3 illustrates a more detailed view of the device connection system.
FIG. 4 illustrates a connection history utilized by the connection system.
FIGS. 5A-5C illustrates different examples of applications executed by a connected device being mirrored by a vehicle system.
FIG. 6 illustrates a method for managing the connection of multiple devices to a vehicle system.

### DETAILED DESCRIPTION

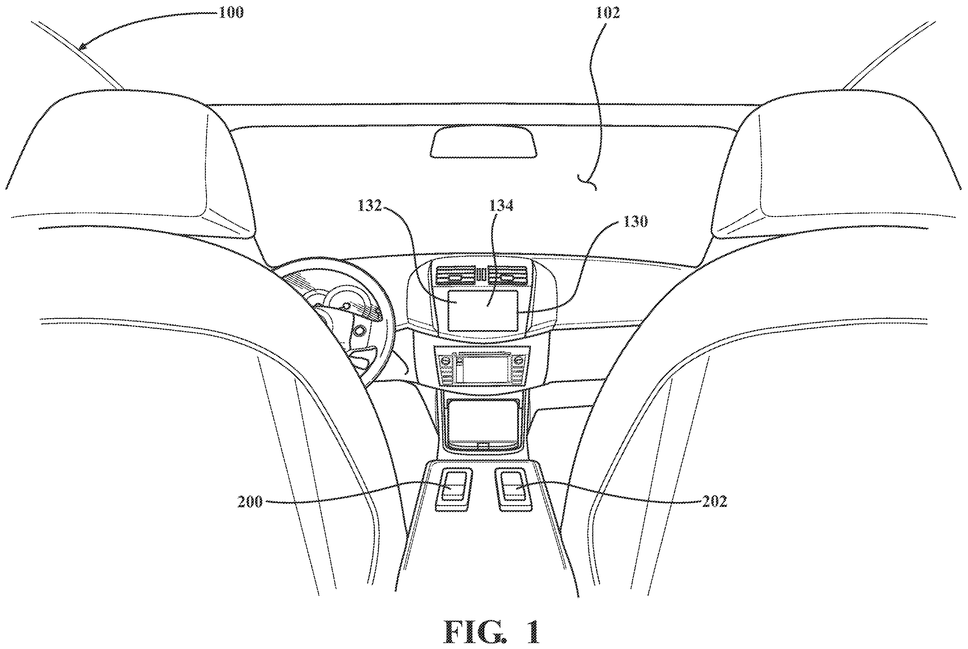

Described are systems and methods for managing the connection of multiple devices to a vehicle system. For example, FIG. 1 illustrates a vehicle 100 having an interior 102 where occupants of the vehicle 100 may reside. Located within the interior 102 of the vehicle 100 is a vehicle head unit 130 that may include both an input system 132 and an output system 134 that may be in the form of a touchscreen that allows the occupants of the vehicle 100 to visually receive an output from the vehicle head unit 130 and provide inputs to the vehicle head unit 130. It should be understood that the vehicle head unit 130 is one type of vehicle system that may be connected to multiple devices, such as the devices 200 and 202, utilizing the systems and methods described herein. As such, the vehicle head unit 130 is just an example of one type of a vehicle system which can take many different forms.

As will be described in greater detail later in this description, when multiple devices attempt to connect to a vehicle system, such as the vehicle head unit 130 and/or other vehicle systems, the systems and methods described herein utilize a connection history to determine which of the devices 200 and 202 were most recently connected to the vehicle system. Once the most recently connected device is determined, the systems and methods described herein connect the most recently connected device, in this example, the device 200, to the vehicle system, such as the vehicle head unit 130. Generally, this connection may include services such as application mirroring services, such as Apple CarPlay and/or Android Auto. As such, occupants of the vehicle 100 can interact with applications operating on the device 200 utilizing the input system 132 and the output system 134 of the vehicle head unit 130.

In addition, the systems and methods can also determine when a resolve conflict flag is set to true, which may be a user-designated setting, indicating that the systems and methods described herein should resolve conflicts between multiple devices that may be connecting to the vehicle system. Assuming the resolve conflict is set to true, the systems and methods will then connect a later connected device, such as the device 202, to the vehicle system such that it does not conflict with the operation of the more recently connected device, which was defined as the device 200. In effect, the device 200 can continue to provide application mirroring services and other services, while the device 202 may be able to utilize a different set of services, such as Bluetooth hands-free phone and/or music streaming. By so doing, this allows multiple devices to communicate with the vehicle system, such as the vehicle head unit 130, without causing conflicts that could inhibit the operation and benefits provided by having the devices 200 and 202 connected to the vehicle system.

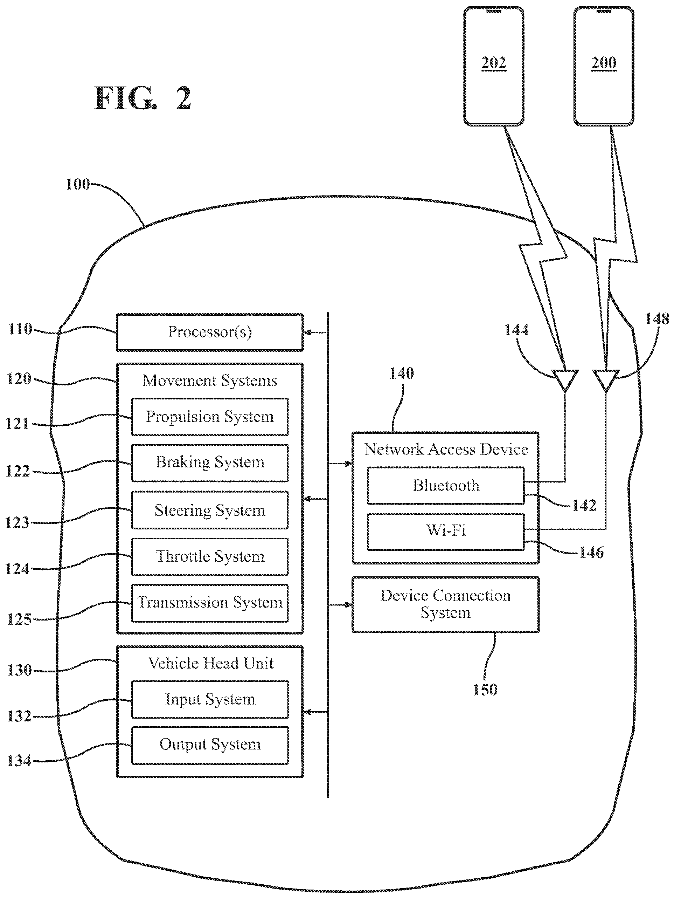

Referring to FIG. 2, a block diagram illustrating various components of the vehicle 100 is shown. As used herein, a "vehicle" is any form of powered transport. In one or more implementations, the vehicle 100 is an automobile. While arrangements will be described herein with respect to automobiles, it will be understood that embodiments are not limited to automobiles. In some implementations, the vehicle 100 may be any robotic device or form of powered transport.

The vehicle 100 also includes various elements. It will be understood that in various embodiments, it may not be necessary for the vehicle 100 to have all of the elements shown in FIG. 2. The vehicle 100 can have any combination of the various elements shown in FIG. 2. Further, the vehicle 100 can have additional elements to those shown in FIG. 2. In some arrangements, the vehicle 100 may be implemented without one or more of the elements shown in FIG. 2. While the various elements are shown as being located within the vehicle 100 in FIG. 2, it will be understood that one or more of these elements can be located external to the vehicle 100. Further, the elements shown may be physically separated by large distances and provided as remote services (e.g., cloud-computing services).

As mentioned before, the vehicle 100 may be an automobile and, therefore, may include various movement systems 120 that allow the vehicle 100 to move from location to location. In this example, the vehicle 100 can include a propulsion system 121, a braking system 122, a steering system 123, a throttle system 124, and a transmission system 125. Of course, as mentioned before, each of these systems can include one or more devices, components, and/or a combination thereof, now known or later developed. For example, if the vehicle 100 is autonomous or partially autonomous, the vehicle 100 can have other systems and subsystems that provide enable functionality.

As previously stated, the vehicle systems of the vehicle 100 can also include a vehicle head unit 130. The vehicle head unit 130, sometimes referred to as an infotainment system, may be a vehicle audio/video component providing a unified hardware interface for the system, including the previously mentioned input system 132 and output system 134. As mentioned before, the vehicle head unit 130 may utilize a touchscreen that can act as both the input system 132 and the output system 134. However, the output system 134 can also include other outputs, such as audio, haptic, and the like. The input system 132 can also include buttons, switches, knobs, and the like to either complement or replace a touchscreen.

The vehicle 100 may also include a network access device 140 is a type of hardware device that allows the various vehicle systems, including the vehicle head unit 130, to communicate with other components, including devices, such as mobile phones, tablet-based computers, laptop computers, handheld game systems, etc. In this example, the network access device 140 may include a Bluetooth communication component 142 and a Wi-Fi communication component 146 that allows communication via a Bluetooth communication methodology via an antenna 144 and a Wi-Fi communication methodology via an antenna 148, respectively. Additionally, it should be understood that the devices can be connected to the vehicle utilizing wired connections as well or a combination of wired and wireless connections.

Generally, Bluetooth is a short-range wireless technology standard that is used for exchanging data between fixed and mobile devices over short distances and building personal area networks. Wi-Fi, another wireless technology standard, has a greater range and capacity than Bluetooth. Because of the differences between these different communication methodologies, Bluetooth may be suitable for providing hands-free phone services and music streaming services, while Wi-Fi is more appropriate for allowing more advanced services, such as application mirroring services, including Apple CarPlay and Android Auto.

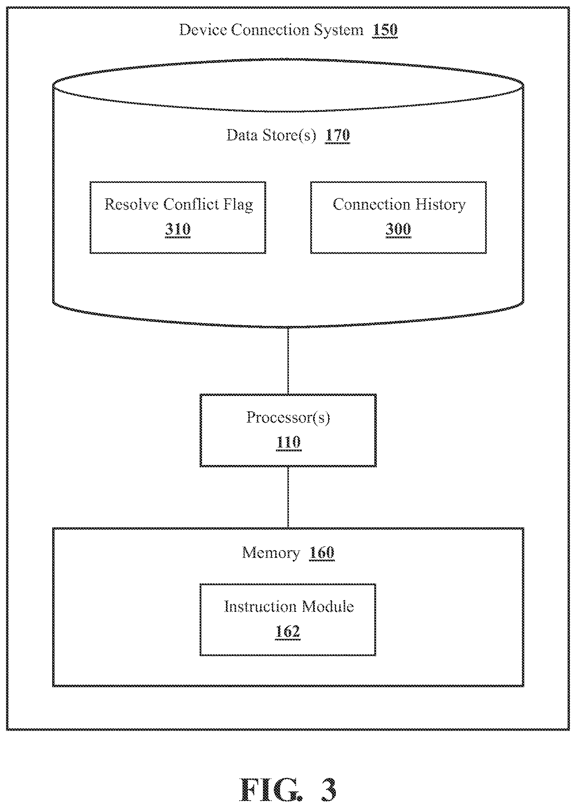

The vehicle 100 also includes a device connection system 150 that manages the connection of multiple devices, such as wireless devices 200 and 202, with one or more vehicle systems of the vehicle 100. Of course, the wireless devices 200 and 202 may be connected using a wired connection methodology as well or even a combination of wired and wireless connection methodologies. With reference to FIG. 3, one example of the device connection system 150 is further illustrated. As shown, the device connection system 150 includes one or more processor(s) 110. Accordingly, the processor(s) 110 may be a part of the device connection system 150, or the device connection system 150 may access the processor(s) 110 through a data bus or another communication path.

In one or more embodiments, the processor(s) 110 is an application-specific integrated circuit that is configured to implement functions associated with an instruction module 162. In general, the processor(s) 110 is an electronic processor, such as a microprocessor, that is capable of performing various functions as described herein. In one embodiment, the device connection system 150 includes a memory 160 that stores the instruction module 162. The memory 160 is a random-access memory (RAM), read-only memory (ROM), a hard disk drive, flash memory, or other suitable memory for storing the instruction module 162. The instruction module 162 is, for example, computer-readable instructions that, when executed by the processor(s) 110, cause the processor(s) 110 to perform the various functions disclosed herein.

Furthermore, in one embodiment, the device connection system 150 includes one or more data store(s) 170. The data store(s) 170 is, in one embodiment, an electronic data structure such as a database that is stored in the memory 160 or another memory and that is configured with routines that can be executed by the processor(s) 110 for analyzing stored data, providing stored data, organizing stored data, and so on. Thus, in one embodiment, the data store(s) 170 stores data used by the instruction module 162 in executing various functions.

In one embodiment, the data store(s) 170 may store a connection history 300 and a resolve conflict flag 310. The connection history 300 describes the connection history of devices that are connected to one or more vehicle systems, such as the vehicle head unit 130. Moreover, in one example, the connection history 300 can indicate the identity of a device, when the device was connected to the vehicle system, which vehicle system the device was connected to, and what services the device provided and/or utilized. The services utilized and/or provided stored in the connection history 300 can include services such as Apple CarPlay, Android Auto, hands-free phone operation, audio/video streaming, and the like. In addition, the connection methodology, such as Wi-Fi and/or Bluetooth, can also be stored in the connection history 300 as well. As such, the connection history 300 can be utilized to determine which device was the most recently connected to a vehicle system, such as the vehicle head unit 130, what services it provided/utilized, and what connection methodology was used to connect the device to a particular vehicle system.

The resolve conflict flag 310, as will be described later, may be set by a user using, for example, the input system 132 of the vehicle head unit 130. The resolve conflict flag 310 indicates if the device connection system 150 should proceed with attempting to resolve conflicts when multiple devices are connecting and/or attempting to connect to a particular vehicle system, such as the vehicle head unit 130. In this example, if the resolve conflict flag 310 is set to true, the device connection system 150 will resolve conflicts. Conversely, if the resolve conflict flag 310 is set to false, the device connection system 150 will not proceed with resolving conflicts and connecting devices using the connection history 300, as will be described in greater detail later. Additionally, it should be understood that the "true" setting and/or the "false" setting are merely examples of different settings. In some cases, these settings may be reversed, wherein a false setting means to resolve conflicts while a true setting means the opposite. Further still, the resolve conflict flag 310 can take a number of different formats and does not necessarily need to be a simple true/false setting. As such, the true/false setting should be interpreted broadly as an indicator that indicates whether conflict should be resolved or not.

Regarding the instruction module 162, as mentioned before, the instruction module 162 includes instructions that, when executed by the processor(s) 110, cause the processor(s) 110 to perform any one of the methodologies disclosed herein. In one example, the instruction module 162 includes instructions that cause the processor(s) 110 to determine when one or more devices, such as the devices 200 and/or 202, are attempting to connect to one or more vehicle systems, such as the vehicle head unit 130. Moreover, in one example, the multiple devices 200 and/or 202 may initially communicate with the processor(s) 110 via the network access device 140. In some cases, initial communication between the devices 200 and/or 202 may be performed via the Bluetooth communication component 142 using the antenna 144. This initial communication may be a general communication to provide initial setup information and handshaking information.

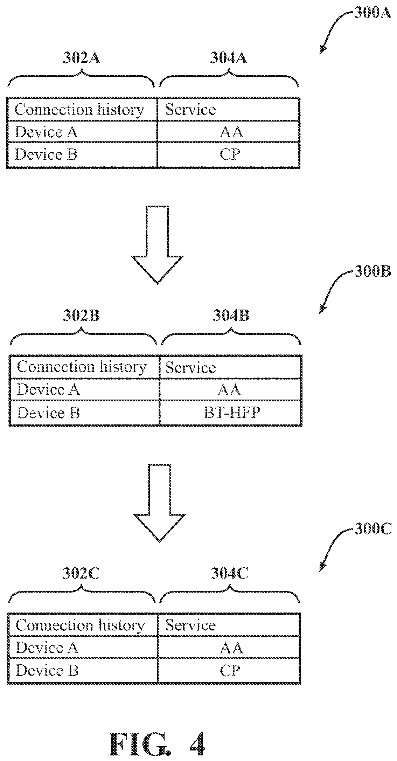

When multiple devices are attempting to connect to one or more vehicle systems, the instructions of the instruction module 162 cause the processor(s) 110 to determine which of the multiple devices 200 and 202 is the most recently connected device. This can be achieved by evaluating the connection history 300. For example, FIG. 4 illustrates the connection history 300A-300C at different moments in time. Here, the connection history 300A-300C includes device identifiers 302A-302C that identify different devices and the order in which they were connected, with the most recently connected device located near the top, while a later connected device is located below. As such, in this example, Device A, which is the identifier for the device 200, was more recently connected than Device B, which is the identifier for the device 200. In addition, the type of service 304A-304C is also shown. In this case, the connection history 300A illustrates that Device A connected to one or more vehicle systems using Android Auto services, while Device B connected to one or more vehicle systems using Apple CarPlay services.

After determining which of the multiple devices is the most recently connected device, the instructions of the instruction module 162 cause the processor(s) 110 to connect the most recently connected device, in this case, Device A (device 200), to the one or more vehicle systems, such as the vehicle head unit 130 using the service Android Auto services. Once this occurs, the connection history 300 may be updated (if necessary) to indicate that Device A is the most recently connected device and the services utilized. As such, at this moment in the methodology, the device 200 (Device A) is now connected to the vehicle head unit 130 and can utilize Android Auto services.

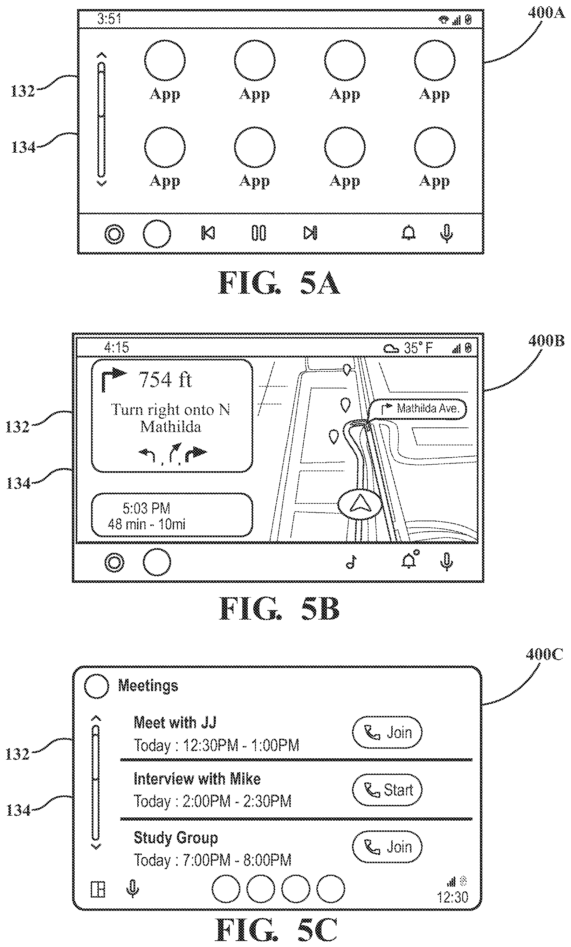

For example, referring to FIGS. 5A-5C illustrated are different example screenshots 400A-400C of different applications operating on the device 200, but are being mirrored on the vehicle head unit 130. The example screenshot 400A illustrates an Android Auto menu screen allowing the occupant of the vehicle to select different applications. The example screenshot 400B illustrates a navigation application operating on the device 200 but being mirrored on the vehicle head unit 130. The example screenshot 400C illustrates a meeting application operating on the device 200 but being mirrored on the vehicle head unit 130. It should be understood that the types of applications mirrored on the vehicle head unit 130 using the device 200 are numerous and should not be limited to just the examples provided.

Further, it is worth noting that when application mirroring services are used, such as Android Auto and Apple Car Play, the device 200 may be connected using the Wi-Fi component 136. As such, the device 200 ly communicates with the antenna 148 of the Wi-Fi communication component 146 to connect to the vehicle head unit or any other vehicle systems. Generally, application mirroring services utilize a Wi-Fi connection methodology due to bandwidth and other demands that make using the Wi-Fi connection methodology more suitable.

Once the device 200 is connected to the vehicle system, the instructions stored in the instruction module 162 may then cause the processor(s) 110 to determine the setting of the resolve conflict flag 310. In this example, if the resolve conflict flag 310 is set to a false setting, the instruction module 162 causes the processor(s) 110 to determine if connecting the later connected device, in this case, the device 202 (Device B), would cause a conflict. In this case, because the connection history 300A indicates that the device 202 (Device B) utilizes Apple CarPlay, which would also require the same connection methodology (i.e., Wi-Fi), this device would not be connected to the vehicle head unit 130 and/or any other vehicle system. Conversely, if the connection history 300A indicated that the device 202 (Device B) utilizes a non-conflicting service, such as hands-free phone services via Bluetooth utilizing the Bluetooth communication component 142, the instructions of the instruction module 162 would cause the processor(s) 110 to connect the device 202 (Device B) utilizing only the Bluetooth communication component 142.

The paragraph above describes one example of what would occur if the resolve conflict was set to false. However, when the resolve conflict is set to true, the instructions of the instruction module 162 cause the processor(s) 110 to connect the device 202 (Device B) utilizing a non-conflicting service. As mentioned before, the connection history 300A indicates that the device 202 (Device B) connects to the vehicle systems of the vehicle 100 such that it can utilize Apple CarPlay services. Normally, under prior art solutions, this results in the device 202 (Device B) not being connected to the vehicle systems of the vehicle 100 when a more recently connected device, in this case, the device 200 (Device A), has a connection priority. However, the device connection system 150 can essentially manage the connection of the device 202 (Device B) such that it will not conflict with the device 200 (Device A).

Moreover, the instructions of the instruction module 162 cause the processor(s) 110 to connect the device 202 (Device B) using a different connection methodology in a different set of services not specifically detailed in the connection history 300A. In this example, the instruction module 162 cause the processor(s) 110 to connect the device 202 (Device B) via the Bluetooth communication component 142 and allows it to utilize certain services, such as hands-free phone services and/or audio/video streaming services. As such, this allows two different devices to be connected to the vehicle head unit 130 and/or other vehicle systems utilizing two different connection methodologies, allowing two different types of services. As such, the driver of the vehicle 100 can connect the device 200 to utilize mapping applications that will be mirrored on the vehicle head unit 130, while a passenger of the vehicle 100 can connect the device 202 to utilize hands-free phone and/or music streaming services. As mentioned before, prior art systems generally only allowed the most recently connected device to connect to a vehicle system, preventing any other devices and their users from enjoying any services.

As mentioned before, when the device 200 (Device A), the connection history 300C may be updated (if necessary) to indicate that the device 200 was the most recently utilized device. When the resolve conflict is set to true and a second device, such as the device 202 (Device B), is connected to one or more vehicle systems of the vehicle 100, the connection history 300C regarding the device 202 (Device B) is purposely not updated. Moreover, by not updating the connection history 300C to indicate that the device 202 (Device B) is connected via Bluetooth utilizing hands-free phone services (BT-HFP), the user preference to connect the device 202 (Device B) to use Apple CarPlay when Device A is not located nearby is maintain.

To better understand why the device history regarding the device 202 (Device B) is not updated when the resolve conflict is set to true, consider the following scenario. Assume there is a person who irregularly utilizes a particular vehicle and prefers to utilize Apple Car Play when utilizing that particular vehicle. Also assume that another person who more regularly and recently utilizes the vehicle prefers to utilize Android Auto. If both persons are located within the same vehicle at the same time, the methodology described above would connect the device of the more recent person using Android Auto, while the other person would be connected such that they could utilize non-conflicting services, such as Bluetooth hands-free phone services.

If the connection history was updated to indicate that the person who generally prefers utilizing Apple CarPlay connected most recently to utilize Bluetooth hands-free phone services, the next time this particular person utilizes this particular vehicle, their device will connect to the vehicle systems of the vehicle to utilize Bluetooth hands-free phone services and not their preferred Apple CarPlay services, regardless of if there is another occupant with a device within the vehicle. Therefore, the connection history regarding the device 202 (Device B) is not updated when the resolve conflict is set to true to prevent this inconvenience.

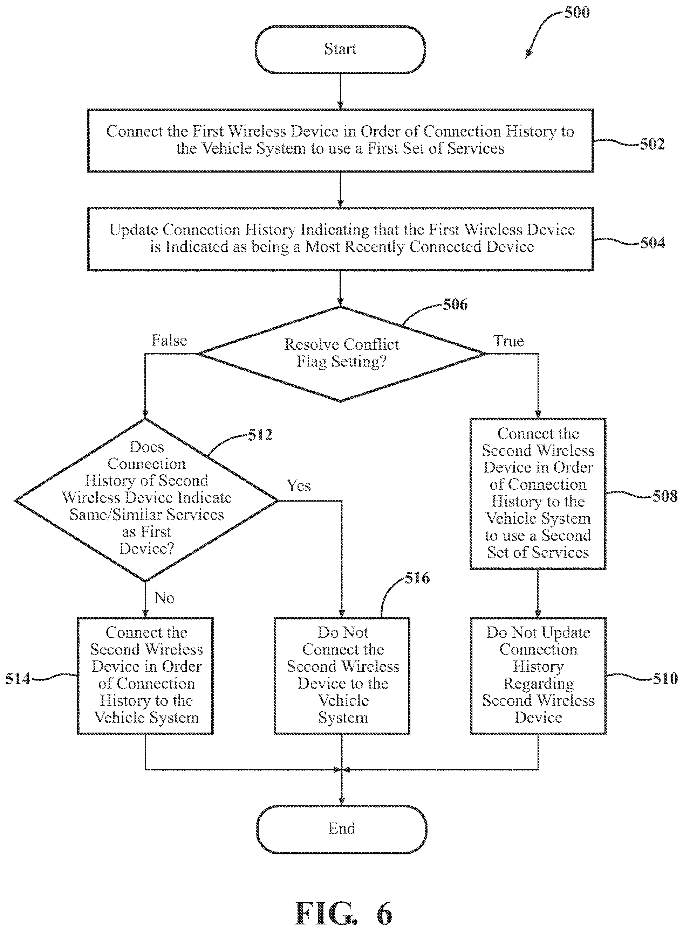

Referring to FIG. 6, a method 500 for managing the connection of multiple devices to a vehicle system is shown. The method 500 will be described from the viewpoint of the vehicle 100 in FIG. 2 and the device connection system 150 in FIG. 3. However, it should be understood that this is just one example of implementing the method 500. While method 500 is discussed in combination with the device connection system 150, it should be appreciated that the method 500 is not limited to being implemented within the device connection system 150, but is instead one example of a system that may implement the method 500.

In step 502, the instructions of instruction module 162 cause the processor(s) 110 to connect a first device, such as the device 200, in order of connection history 300 to the vehicle system, such as the vehicle head unit 130, to use a first set of services. Here, when receiving a request for multiple devices, the instruction module 162 causes the processor(s) 110 to determine which device was the most recently connected device and then connects that particular wireless device to a vehicle system utilizing one type of connection methodology, such as Wi-Fi.

In step 504, the instructions of the instruction module 162 may cause the processor(s) 110 to update the connection history 300 to indicate that the first device is indicated as being the most recently connected device. In some cases, this may not be necessary, as the connection history 300 may already indicate that the first device is the most recently connected device. However, there may be cases where another device is indicated as the most recently connected and is now no longer the case, necessitating that the connection history 300 be updated.

In step 506, the instructions of the instruction module 162 may cause the processor(s) 110 to determine the setting of the resolve conflict flag 310. If the resolve conflict flag 310 is set to false, there is a determination, as shown in step 512, if the connection history 300 of a second device indicates the use of same/similar services as the first device. When this occurs, the method 500 proceeds to step 516, wherein the second device is not connected to a vehicle system. If the service is not conflicting, the method 500 proceeds to step 514, wherein the second device will be connected in order of connection history to the vehicle system. For example, if the connection history 300 indicates that the second device utilizes a non-conflicting service, such as Bluetooth hands-free phone services, and the first device utilizes Android Auto, the processor(s) 110 can then connect the second device without creating a conflict. After that, the method 500 may end.

Returning to step 506, if the resolve conflict flag 310 is set to true, the instructions of the instruction module 162 cause the processor(s) 110, as shown in step 508, to connect the second device to a vehicle system, such as the vehicle head unit 130, to utilize a second set of services that differ from the first set of services utilized by the first device. In addition, the second device may be connected utilizing a different connection methodology, such as Bluetooth, than that of the first device. As such, two different devices that utilize two different non-conflicting services (i.e., Android Auto and Bluetooth hands-free phone) and different connection methodologies (i.e., Wi-Fi and Bluetooth) can be connected to a vehicle system of the vehicle 100.

In step 510, the connection history 300 regarding the second device is not updated. As explained previously, this is to maintain any preferred settings regarding the second device and how it connects to one or more vehicle systems. This is helpful in situations where the second device is the only device attempting to connect to the vehicle systems of the vehicle 100. By not updating the connection history 300 when the resolve conflict flag 310 is set to true, preferred settings can be maintained.

Detailed embodiments are disclosed herein. However, it is to be understood that the disclosed embodiments are intended only as examples. Therefore, specific structural and functional details disclosed herein are not to be interpreted as limiting but merely as a basis for the claims and as a representative basis for teaching one skilled in the art to variously employ the aspects herein in virtually any appropriately detailed structure. Further, the terms and phrases used herein are not intended to be limiting but rather to provide an understandable description of possible implementations. Various embodiments are shown in FIGS. 1-6, but the embodiments are not limited to the illustrated structure or application.

The flowcharts and block diagrams in the figures illustrate the architecture, functionality, and operation of possible implementations of systems, methods, and computer program products according to various embodiments. In this regard, each block in the flowcharts or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved.

The systems, components and/or processes described above can be realized in hardware or a combination of hardware and software and can be realized in a centralized fashion in one processing system or in a distributed fashion where different elements are spread across several interconnected processing systems. Any processing system or another apparatus adapted for carrying out the methods described herein is suited. A typical combination of hardware and software can be a processing system with computer-usable program code that, when being loaded and executed, controls the processing system such that it carries out the methods described herein. The systems, components, and/or processes also can be embedded in a computer-readable storage, such as a computer program product or other data programs storage device, readable by a machine, tangibly embodying a program of instructions executable by the machine to perform methods and processes described herein. These elements also can be embedded in an application product that comprises all the features enabling the implementation of the methods described herein and which when loaded in a processing system, is able to carry out these methods.

Furthermore, arrangements described herein may take the form of a computer program product embodied in one or more computer-readable media having computer-readable program code embodied, e.g., stored, thereon. Any combination of one or more computer-readable media may be utilized. The computer-readable medium may be a computer-readable signal medium or a computer-readable storage medium. The phrase "computer-readable storage medium" means a non-transitory storage medium. A computer-readable storage medium may be, for example, but not limited to, an electronic, magnetic, optical, electromagnetic, infrared, or semiconductor system, apparatus, or device, or any suitable combination of the preceding. More specific examples (a non-exhaustive list) of the computer-readable storage medium would include the following: a portable computer diskette, a hard disk drive (HDD), a solid-state drive (SSD), a read-only memory (ROM), an erasable programmable read-only memory (EPROM or Flash memory), a portable compact disc read-only memory (CD-ROM), a digital versatile disc (DVD), an optical storage device, a magnetic storage device, or any suitable combination of the preceding. In the context of this document, a computer-readable storage medium may be any tangible medium that can contain or store a program for use by or in connection with an instruction execution system, apparatus, or device.

Generally, module as used herein includes routines, programs, objects, components, data structures, and so on that perform particular tasks or implement particular data types. In further aspects, a memory generally stores the noted modules. The memory associated with a module may be a buffer or cache embedded within a processor, a RAM, a ROM, a flash memory, or another suitable electronic storage medium. In still further aspects, a module as envisioned by the present disclosure is implemented as an application-specific integrated circuit (ASIC), a hardware component of a system on a chip (SoC), as a programmable logic array (PLA), or as another suitable hardware component that is embedded with a defined configuration set (e.g., instructions) for performing the disclosed functions.

Program code embodied on a computer-readable medium may be transmitted using any appropriate medium, including but not limited to wireless, wireline, optical fiber, cable, RF, etc., or any suitable combination of the preceding. Computer program code for carrying out operations for aspects of the present arrangements may be written in any combination of one or more programming languages, including an object-oriented programming language such as Java^{™}, Smalltalk, C++, or the like, and conventional procedural programming languages, such as the "C" programming language or similar programming languages. The program code may execute entirely on the user's computer, partly on the user's computer, as a stand-alone software package, and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

The terms "a" and "an," as used herein, are defined as one or more than one. The term "plurality," as used herein, is defined as two or more than two. The term "another," as used herein, is defined as at least a second or more. The terms "including" and/or "having," as used herein, are defined as comprising (i.e., open language). The phrase "at least one of ... and ...." as used herein refers to and encompasses any and all possible combinations of one or more of the associated listed items. As an example, the phrase "at least one of A, B, and C" includes A only, B only, C only, or any combination thereof (e.g., AB, AC, BC, or ABC).

Aspects herein can be embodied in other forms without departing from the spirit or essential attributes thereof. Accordingly, reference should be made to the following claims rather than to the preceding specification, as indicating the scope hereof.

## Claims

1. A system comprising:
a processor;
a memory in communication with the processor, the memory having instructions that, when executed by the processor, cause the processor to:
based on a connection history, connect, using a first connection methodology, a most recently utilized device from a plurality of devices to a vehicle system such that the most recently utilized device utilizes a first set of services; and
when a resolve conflict flag is set to true, connect, using a second connection methodology, a less recently utilized device from the plurality of devices to the vehicle system such that the less recently utilized device utilizes a second set of services.

2. The system of claim 1, wherein the memory further comprises instructions that, when executed by the processor, cause the processor to: when the resolve conflict flag is set to false and when the connection history indicates that the less recently utilized device is set to utilize the first set of services, not connect the less recently utilized device to the vehicle system.

3. The system of claim 1, wherein the memory further comprises instructions that, when executed by the processor, cause the processor to: when the resolve conflict flag is set to false and when the connection history indicates that the less recently utilized device is set to utilize the second set of services, connect the less recently utilized device to the vehicle system such that the less recently utilized device utilizes the second set of services.

4. The system of claim **1,** wherein the first connection methodology is Wi-Fi and the second connection methodology is Bluetooth.

5. The system of claim 1, wherein the memory further comprises instructions that, when executed by the processor, cause the processor to: update the connection history such that the most recently utilized device is indicated as being a most recently connected device.

6. The system of claim 5, wherein the connection history remains unchanged regarding the less recently utilized device when the resolve conflict flag is set to true.

7. The system of claim 1, wherein the vehicle system is mounted within a vehicle.

8. The system of claim 1, wherein:
the first set of services includes allowing the most recently utilized device to mirror one or more applications operating on the most recently utilized device on a display of the vehicle system; and
the second set of services includes at least one of hands-free phone services and music streaming services.

9. A method comprising:
based on a connection history, connecting, using a first connection methodology, a most recently utilized device from a plurality of devices to a vehicle system such that the most recently utilized device utilizes a first set of services; and
when a resolve conflict flag is set to true, connecting, using a second connection methodology, a less recently utilized device from the plurality of devices to the vehicle system such that the less recently utilized device utilizes a second set of services.

10. The method of claim 9, further comprising: when the resolve conflict flag is set to false and when the connection history indicates that the less recently utilized device is set to utilize the first set of services, not connecting the less recently utilized device to the vehicle system.

11. The method of claim 9, further comprising: when the resolve conflict flag is set to false and when the connection history indicates that the less recently utilized device is set to utilize the second set of services, connecting the less recently utilized device to the vehicle system such that the less recently utilized device utilizes the second set of services.

12. The method of claim 9, wherein the first connection methodology is Wi-Fi and the second connection methodology is Bluetooth.

13. The method of claim 9, further comprising: updating the connection history such that the most recently utilized device is indicated as being a most recently connected device.

14. The method of claim 13, wherein the connection history remains unchanged regarding the less recently utilized device when the resolve conflict flag is set to true.

15. The method of claim 9, wherein the vehicle system is mounted within a vehicle.

16. The method of claim 9, wherein:
the first set of services includes allowing the most recently utilized device to mirror one or more applications operating on the most recently utilized device on a display of the vehicle system; and
the second set of services includes at least one of hands-free phone services and music streaming services.

17. A non-transitory computer-readable medium storing instructions that, when executed by a processor, cause the processor to:
based on a connection history, connect, using a first connection methodology, a most recently utilized device from a plurality of devices to a vehicle system such that the most recently utilized device utilizes a first set of services; and
when a resolve conflict flag is set to true, connect, using a second connection methodology, a less recently utilized device from the plurality of devices to the vehicle system such that the less recently utilized device utilizes a second set of services.

18. The non-transitory computer-readable medium of claim 17, further comprising instructions that, when executed by the processor, cause the processor to: when the resolve conflict flag is set to false and when the connection history indicates that the less recently utilized device is set to utilize the first set of services, not connect the less recently utilized device to the vehicle system.

19. The non-transitory computer-readable medium of claim 17, further comprising instructions that, when executed by the processor, cause the processor to: when the resolve conflict flag is set to false and when the connection history indicates that the less recently utilized device is set to utilize the second set of services, connect the less recently utilized device to the vehicle system such that the less recently utilized device utilizes the second set of services.

20. The non-transitory computer-readable medium of claim 17, further comprising instructions that, when executed by the processor, cause the processor to:
update the connection history such that the most recently utilized device is indicated as being a most recently connected device; and
not update the connection history regarding the less recently utilized device when the resolve conflict flag is set to true.
